Europäisches Patentamt

**European Patent Office**

**Office européen des brevets**

(11) Publication number: **0 101 352**
**A1**

# (12) EUROPEAN PATENT APPLICATION

(21) Application number: **83401480.5**

(22) Date of filing: **19.07.83**

(51) Int. Cl.³: **G 11 B 5/12**

(30) Priority: **20.07.82 US 400079**

(43) Date of publication of application:
**22.02.84 Bulletin 84/8**

(84) Designated Contracting States:
**DE FR GB IT NL SE**

(71) Applicant: **VERTIMAG SYSTEMS CORPORATION**
**815 14th Avenue**
**Southeast Minneapolis (Minnesota 55414)(US)**

(72) Inventor: **Dugas, Matthew P.**
**639 Buchanan**
**Minneapolis Minnesota 55413(US)**

(72) Inventor: **Wuori, Edward R.**
**5613 St. Stephen Street**
**St Paul Minnesota 55112(US)**

(74) Representative: **Bloch, Robert et al,**
**39 avenue de Friedland**
**F-75008 Paris(FR)**

(54) **Read/write head with a planar coil or coils.**

(57) A megnetic head for recording and reproducing information on a perpendicular magnetic recording medium, has a pole-piece comprising an elongated thin film layer of a magnetic material and a flat electrical coil comprising a planar spiral (4) of a thin film conductor with a portion of at least one turn thereof being transverse to and closely adjacent the pole-tip end (1a) of the pole-piece (1).

FIG.1

- 1 -

## "READ/WRITE HEAD WITH A PLANAR COIL OR COILS".

The present invention relates to a read/write head for use in perpendicular recording.

In conventional magnetic recording media, data are recorded by magnetizing the magnetic layer of the medium in a longitudinal direction parallel to the direction of relative movement between the magnetic medium and the transducer, or head, positioned adjacent to the medium. In perpendicular recording, data are recorded by magnetizing the magnetic recording layer in the direction perpendicular to the surface of the medium.

Magnetic recording transducers generally fall into two classes: ring-type heads that employ a ring having a gap therein and single pole-piece heads that employ an elongated rod or strip to link the magnetic flux being sensed by the head with an operatively associated coil. In ring-type heads, the resolution of the head is a function of the length of the gap, whereas in single-pole piece heads, the resolution is a function of the thickness of the pole-piece at its tip.

Ring-type heads have long been used in longitudinal recording and they have also been proposed for use in perpendicular recording. However, since a major advantage of perpendicular recording is the ability to read and write data at high density, the use of ring-type heads in perpendicular recording is not advantageous because the broad pulse widths obtained with ring-type heads lead to peak shift problems at high densities. Further, ring type heads provide asymmetric pulse shapes and, in general, give rise to difficulties in reading and writing at ultra high densities. Furthermore, ring-type heads cannot be used with all perpendicular recording media.

Single pole-piece heads offer the advantage of high resolution if the pole-piece is made by thin film deposition techniques. With thin film deposition, pole-pieces of less than one micron thick can easily be obtained, which would enable the head to read information stored at very high densities. However, previous efforts employing single pole-piece heads have resulted in structures of low efficiency and/or high complexity. Iwasaki et al, U.S. Patent 4,210,946 proposes a variety of single pole-piece heads employing a coil wound around the head remote from the tip of the pole-piece, the coil being coaxial with or parallel to the axis of the pole-piece. Iwasaki et al suggest that their proposed heads are optimum with a relatively large auxiliary pole-piece, around which the coil is wound, on the side of the recording medium opposite the thin film main pole-piece, but in such cases they would require novel mechanical fixturing and would be of doubtful utility for rigid-disc drives.

The present invention provides a read/write head for perpendicular recording techniques employing a single pole-piece and an elongated, planar spiral coil in close proximity to and operatively associated with the pole-piece. One end of the coil is positioned closely adjacent and transverse to the tip of the pole piece, and the opposite end of the coil is remote from the pole-tip. Through the use of a pole-piece comprising a thin film layer of magnetic material, the read/write head of the present invention has a sufficiently high reading efficiency to enable it to read high density perpendicular magnetic recording media. When an excitation current is applied to the coil of the read/write head of the invention, a magnetic field is produced at the tip of the pole-piece perpendicular to the surface of the recording medium, whereby the head may be used to write on the medium. In preferred embodiments of the invention, separate read and write coils are employed.

The present invention is illustrated in terms of its preferred embodiment in Figs. 1-13 of the accompanying drawings, in which:

Fig. 1 is a plan view in elevation with parts broken away of the read-write head of the invention;

Fig. 2 is an elevational view in section taken along lines 2-2 of Fig. 1;

Fig. 3 is a plan view in section taken along lines 3-3 of Fig. 1;

Fig. 4 is a diagrammatic view of the pole-piece and coils of the head in use;

Fig. 5 is a diagrammatic view of the magnetic fields produced at the tip of the pole-piece;

Fig. 6 is a plan view of an alternative according to the invention in which most of the top layer has been broken-away;

Fig. 7 is an elevational view in section along lines 7-7 of Fig. 6;

Fig. 8 is a plan view of another embodiment of the head according to the invention with parts broken away;

Fig. 9 is a diagrammatic view of a recording medium that has been recorded on by the head of Fig. 8;

Fig. 10 is a plan view of another embodiment of the invention with parts broken away;

Fig. 11 is an elevational view in section along lines 11-11 of Fig. 10;

Fig. 12 is a plan view of another embodiment of the invention with parts broken away; and

Fig. 13 is an elevational view in section along lines 13-13 of Fig. 12.

- 5 -

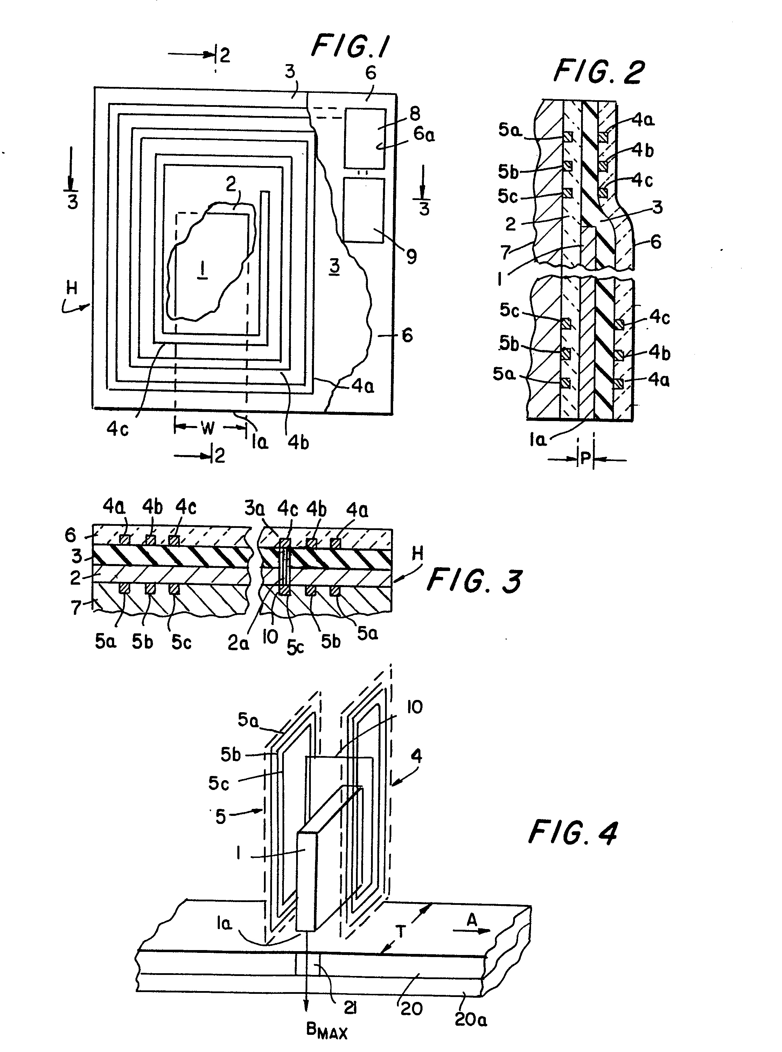

Referring to the drawings, where like numerals indicate like parts, Fig. 1 shows a read/write head H comprising a thin, elongated layer 1 of magnetic material, such as Permalloy, which serves as the pole-piece of head H and which terminates in a tip 1a. Insulating layers 2 and 3, such as aluminum oxide, separate the pole-piece 1 from spiral coils 4 and 5. Layer 6 acts to protect coil 4, and the assembly is carried by substrate 7, such as a ferrite, ceramic or sapphire wafer about 0.25 to about 2.5 mm thick.

Head H may be assembled by depositing a thin layer of aluminum on substrate 7 followed by photolithographic etching to provide spiral 5. After depositing the insulating layer 2 over spiral 5, the pole-piece 1 is deposited on layer 2 by sputtering techniques known per se in the art. After depositing the insulating layer 3, spiral 4 is formed on layer 3 in the same manner that spiral 5 is formed on layer 2, layers 2 and 3 typically being about 0.5 micrometers thick. Bonding pads 8 and 9 are formed on layer 3 and substrate 2, respectively, at the same time that coils 4 and 5 are formed, the first turn 4a terminating in pad 8, and the first turn 5a terminating in pad 9. Coils 4 and 5 are electrically connected in anti-series by electrical connector 10. Aligned apertures 2a, 3a are provided in layers 2 and 3 during their deposition, whereby when aluminum is deposited on layer 3 to form coil 4, the aluminum will deposit through apertures 2a, 3a to form connector 10. Access to pad 8 is via window 6a in layer 6, and similar aligned windows are provided in layers 2, 3 and 6 to expose bonding pad 9.

Spirals 4 and 5 desirably have as many turns as is feasible, such as six, but only three such turns, 4a-4c and 5a-5c, are shown for simplicity. Spirals 4 and 5 are planar coils that will provide or sense magnetic flux, as will be described hereinafter.

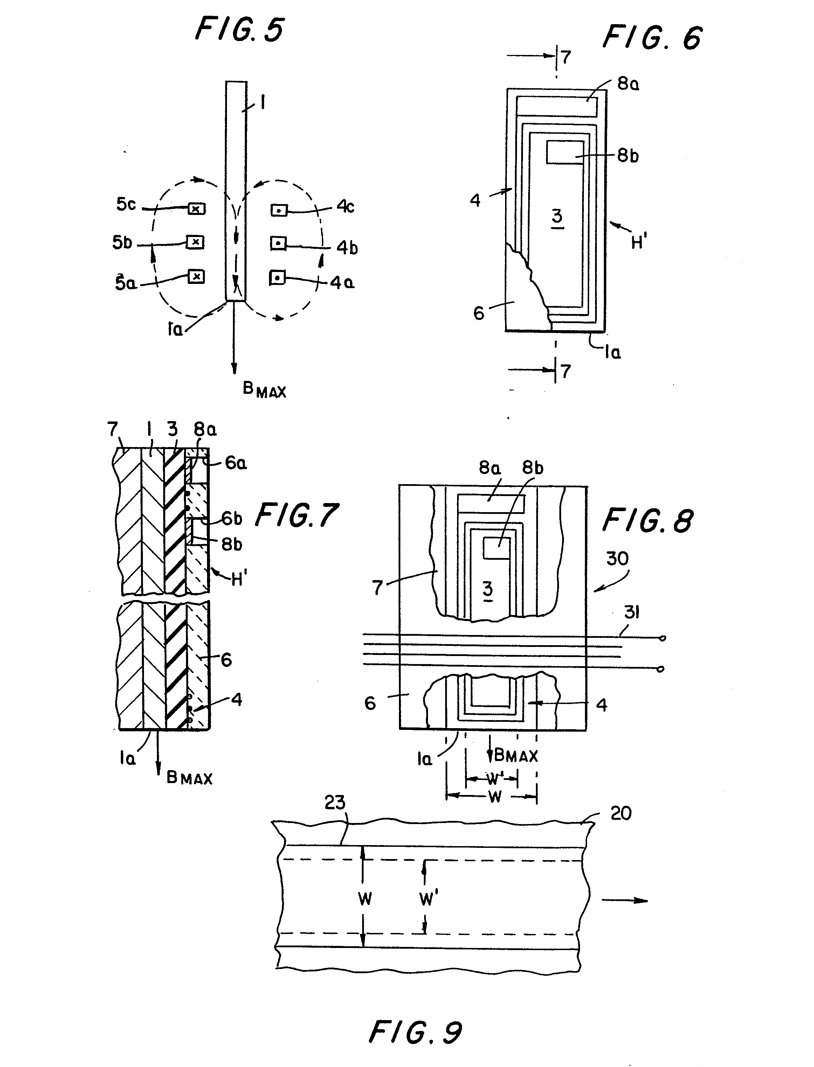

Coils 4 and 5 and connector 10 are diagrammatically shown in Figs. 4 and 5 with substrate 7, and layers 2, 3, and 6 omitted for clarity. The dashed lines in Fig. 4 represent the planes in which coils 4, 5 are contained. As shown in Fig. 4, read/write head H according to the invention is used by disposing it above a suitable rigid or flexible perpendicular magnetic medium 20 with the tip 1a separated from medium 20 by only a small film of air or lubricant of at most 0.25 micrometers thick, and with the width, W, (Fig. 1) of pole-piece 1 across a track T of medium 20. The medium 20 moves relative to the head in the direction of arrow A. The thickness P (Fig. 2) of the pole-piece 1 establishes the resolution of the head.

When head H is used for writing, medium 20 is moved in direction A under head H, and an electric current is applied to coils 4 and 5. A magnetic field is thus generated in coils 4, 5 having its maximum flux density, Bmax, perpendicular to medium 20 and parallel to the planes of the coils 4, 5. Medium 20 preferably has a high permeability magnetic underlayer 20a. Bmax acts to magnetize cell 21 of medium 20 up or down, depending on whether the sign of the field is negative or positive. The flux generated by pole-piece 1 passes through each cell in turn and returns to the pole-piece through the underlayer 20a and then through the region between the medium and the pole-piece and thus closes the magnetic path. Preferably, medium 20 is as described in Iwasaki et al 4,210,946, with an upper layer of CoCr and a lower layer of Permalloy.

In accordance with standard perpendicular recording, data is contained in medium 20 as the presence or absence of a transition in magnetization at specified locations or times. With head H, data is recorded by reversing the write current supplied to coils 4,5 at the appropriate times. Since recording is a trailing edge phenomenon, wavelengths smaller than the thickness, P, of pole-piece 1 can be recorded. As is known, perpendicular recording creates narrow transitions between cells, thereby allowing for high density digital recording. For example, a thin film layer of Permalloy that is 1 micron thick will provide a pole-piece 1 capable of reading information recorded at densities of 25,000 or more flux changes per inch. The use of thinner layers permits the use of even higher densities.

To read the magnetic information stored in medium 20 with head H, one need only detect the electrical voltage produced in coils 4, 5 as the medium 20 moves relative to the pole-piece 1. The read fields create electrical pulses as each transition between cells of opposite magnetization passes under the pole tip.

Vertical component Bmax is shown in more detail in Fig. 5. Thus, coils 4 and 5 are connected in anti-series and wound such that current flows through turns 4a, 4b, 4c in one direction and through turns 5a, 5b, 5c in the opposite direction. Using conventional nomenclature, current is shown flowing through turns 4a, 4b, 4c out of the page and through turns 5a, 5b, 5c into the page. The resultant flux is vector Bmax, which is equal to twice the vertical component of the flux obtained from only one coil.

It is true that coils 4, 5 will create a vertical field at the end of the head H remote from tip 1a that is of opposite sign as Bmax. However, that field is not applied directly to the pole-piece 1 and is so remote from the pole-piece 1 as to be ignored.

In a preferred embodiment of the invention, the head H has an overall length of about 250 mils and an overall width of about 150 mils. This enables easy placement in standard floppy disk drive head mounting fixtures. The pole-piece width W, is a function of the track density. For example, at a density of 96 tracks per inch, W will be about 10 mils, whereas at 48 tracks per inch, W will be about 20 mils. Pole piece 1 should be as thin as desirable and suitably will have a thickness, P, consistent with the requisite bit density, such as about 1 to about 2 micrometers or less.

It is desired to place the tip 1a as close as possible to the first turn (4a, 5a) at one end of the coil, and a distance of about 0.2 mil is practical. Generally, the tip 1a will be no more than about 0.5 mil from the first turn of the coil. In this configuration, pole piece 1 may suitably be from about 5 to about 60 mils long depending, of course, on the particular embodiment.

Coils 4, 5 desirably have as many turns as is feasible, but the precise number of turns must be empirically determined. Satisfactory results have been obtained with six turns. In recording, the flux density, Bmax, is proportional to the number of turns in the coil, as is the voltage produced in the coils in the read mode, and hence it is desirable to use a large number of turns up to the requisite limits of inductance, resistance and self-resonance. The turns themselves are typically from about 2 to about 7 microns wide, and are typically spaced apart about 2 to about 7 microns, using conventional lithographic techniques.

In the write mode, the current required to saturate the recording medium will depend on the particular embodiment of the head and the coercive force of the particular recording medium. A current of up to 0.25 ampere will generally be acceptable. In the read mode, a signal of about 10 microvolts per turn or more will give an acceptable signal to the noise ratio.

Another preferred embodiment of the invention is illustrated in Figs. 6 and 7, where the same reference numerals designate the same elements as in Figs. 1-5. As illustrated, head H' has a magnetic pole piece 1 that has its length and width slightly larger than that of coil 4. Coil 4 is electrically insulated from layer 1 by insulating, non-magnetic layer 3. Windows 6a and 6b in protective layer 6 permit access to bonding pads 8a and 8b, respectively, which are connected to the free ends of coil 4. Head H' may have another coil in series on the other side of pole-piece 1, if desired, as in Figs. 1-5. Since coil 4 is wholly within pole piece 1, the coil 4 is wholly planar. In contrast, the turns of coils 4, 5 of head H are at one elevation where they are over pole piece 1 and another elevation where they extend beyond pole piece 1.

Yet another embodiment of the invention is shown in Fig. 8. In Fig. 8, head 30 is constructed as shown in Figs. 6 and 7, except that a coil 31 is wound around the head 30 adjacent to the tip 1a. When current flows through coil 31, the maximum flux density, $B_{max}$, of coil 31 will be perpendicular to the plane of coil 31, as shown. Coil 4 is used for reading and coil 31 is used only for writing. The dual width read/write head 30 can employ two planar read coils in series as shown in Figs. 1-5, if desired.

Fig. 9 shows a portion of a magnetic medium 20 that has a track 23 of data that was written thereon using coil 31 of head 30. Medium 20 will normally have a large number of adjacent tracks tightly packed thereon. Since the effective writing width of head 30 is the width, W, of polepiece 1, the track 23 has a width equal to W. However, the effective reading width of head 30 is equal to the distance, W', between the "average" turn of coil 4 that lies between the innermost and outermost turns. The dotted lines in Fig. 9 show the portion of track 23 that will be read by head 30. Thus, one advantage of the use of the two-coil head 30 is that various schemes for eliminating cross talk between adjacent tracks, such as tunnel or straddle erase or track following servos, may not be necessary with head 30, because the narrower effective reading width W' can accommodate some mechanical positioning tolerance.

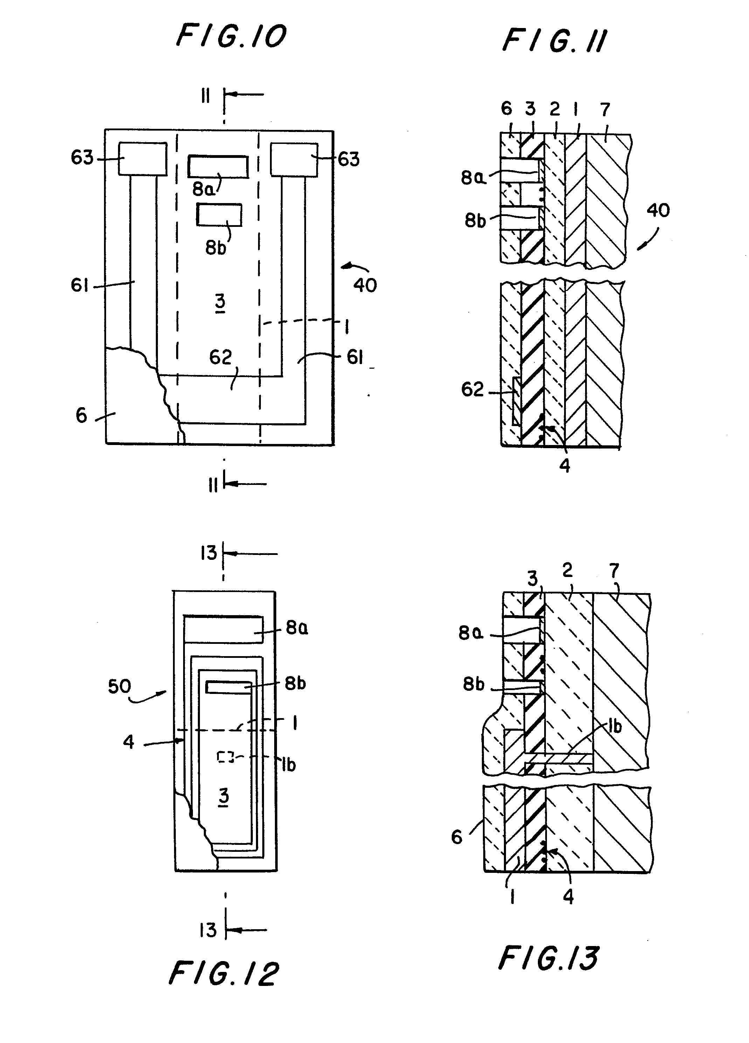

Figs. 10 and 11 illustrate a head 40 that can employ a thin film conductor as the write coil. In head 40, pole-piece 1 and coil 4 are coextensive, with write coil 60 being a thin film conductor layer formed on insulating layer 3 by lithographic techniques. Coil 60 has a single turn consisting of leads 61 and the wide band 62, and bonding pads 63 are provided for connection to a source of current. Preferably, band 62 is about 10 to about 30 mils wide, so as to produce a current "sheet" during writing that generates sufficient flux through pole piece 1 perpencidular to the magnetic medium (not shown). While coils 4 and 60 are shown in Figs. 10 and 11 as being on the same side of pole piece 1, they may be on opposite sides as well.

Head 50 of Figs. 12 and 13 employs a substrate 7' of magentic material, such as a ferrite, in lieu of the non-magnetic substrate 7 of the previous embodiments. In head 50, coil 4 is deposited on non-magnetic layer 2 as a planar spiral by thin film photolithographic techniques, and pole-piece 1 is similarly deposited on non-magnetic, insulating layer 3. Protective layer 6 completes head 40. Apertures provided in layers 2 and 3 are filled with magnetic material when pole-piece 1 is deposited over layer 3, thus forming leg 1b that connects magnetic substrate 7' with pole-piece 1. When widely separating pole piece 1 and magnetic substrate 7'.
Substrate 7' is about 10 to about 100 mils thick and hence is
much thicker than pole piece 1.  In this configuration, head
50 remains a single pole piece head, because the tip of the
layer of magnetic material 1 is the point of maximum magnetic
flux in the head and hence is the only pole in the head, and,
furthermore, the resolution of head 50 when reading information recorded on a magnetic medium is a function of only the
thickness of the pole piece 1 at its tip 1a and is independ-
ent of the distance between pole piece 1 and magnetic substrate
7'.

Head 50 is fabricated by depositing the insulating
layer 2 on the magnetic substrate 7', followed by deposition,
in turn, of layers 3, 1 and 6.  If desired, a separate write
coil, as in Figs. 8 and 10, may be provided.

WHAT IS CLAIMED IS:

1.      A magnetic head for recording and reproducing information on a perpendicular magnetic recording medium,
comprising

      a.   an elongated substrate;

      b.   pole-piece means comprising an elongated thin
film layer of a magnetic material on said substrate and
having a pole-tip end adjacent an end of said substrate;

      c.   flat electrical coil means carried by said
substrate in operative association with said magnetic material,
said flat coil means comprising a planar spiral of a thin
film conductor;

      d.   a portion of at least one turn of said coil means
being transverse to and closely adjacent said pole-tip end; and

      e.   the thickness of said pole-tip end being
operable to establish the resolution of said head when said
head is used to reproduce information on a perpendicular magnetic
recording medium.

2.      The magnetic head according to claim 1, wherein said
coil means has a plurality of turns, and a portion of each
turn  is transverse to and closely adjacent said pole-tip end.

3.      The magnetic head according to claim 2, wherein
said planar spiral lies in a plane parallel to a plane containing said magnetic material.

4.      The magnetic head according to claim 3, wherein said
portion of said turns is essentially perpendicular to the longitudinal axis of said magnetic material.

5.      The magnetic head according to claim 1, wherein said coil means comprises two planar spirals of a thin film conductor disposed opposite sides of said magnetic material and electrically connected in series such that current flows in one direction in one spiral and in the opposite direction in the other, a portion of at least one turn of each said spiral being transverse to and closely adjacent said pole-tip end.

6.      The magnetic head according to claim 5, wherein each said spiral has a plurality of turns and a portion of said turns in each said spiral is transverse to and adjacent said pole-tip end.

7.      The magnetic head according to claim 6, wherein each said spiral and said magnetic material lie in parallel planes.

8.      The magnetic head according to claim 7, wherein said portion of said turns in each said spiral is essentially perpendicular to the longitudinal axis of said magnetic material.

9.      The magnetic head according to claim  1, 4, 5 or 8, wherein said flat electrical coil means is longer than said magnetic material.

10.      The magnetic head according to claim 1, 4, 5 or 8, wherein said flat electrical coil means overlies and is within the boundary of said magnetic material.

11. The magnetic head according to claim 1, wherein a second electrical coil means is operatively associated with said magnetic material, said second coil means being operable to record information on a perpendicular recording medium by producing a magnetic field at said pole tip end when an excitation current is applied to said second coil.

12. The magnetic head according to claim 11, wherein said second electrical coil means is in the form of a single turn of a thin film conductor having a wide portion thereof transverse to said magnetic material, said thin film conductor being operable to cause electrical current applied thereto to flow as a sheet parallel to said magnetic material, said thin film conductor and said magnetic material lying in parallel planes.

13. The magnetic head according to claim 1, 4, 5 or 8 wherein said substrate is of magnetic material, said pole-piece means being widely spaced from said substrate at said pole-tip end and closely spaced from said substrate at the opposite end of said pole-piece means.

14. The magnetic head according to claim 13, wherein pole-piece means contacts said substrate adjacent said opposite end.

FIG. 1

FIG. 2

FIG. 3

FIG. 4

**FIG.5**

**FIG. 6**

**FIG.7**

**FIG.8**

**FIG.9**

## FIG.10

63       63

8a

8b

61

3

40

1

62      61

6

II

## FIG.11

6 3 2 1 7

8a

8b

40

62

4

## FIG.12

8a

8b

50

4

1

1b

3

13

## FIG.13

3 2 7

8a

8b

1b

6

1     4

**European Patent Office**

## EUROPEAN SEARCH REPORT

Application number

| | DOCUMENTS CONSIDERED TO BE RELEVANT | | EP 83401480.5 |
|---|---|---|---|
| Category | Citation of document with indication, where appropriate, of relevant passages | Relevant to claim | CLASSIFICATION OF THE APPLICATION (Int. Cl. ³) |
| X,P | EP - A2 - 0 071 489 (FUJITSU)<br><br> *. Fig. 1-11; claims 1-12;<br> page 10, lines 10-15 *<br><br>-- | 1-4,9,<br>10,13,<br>14 | G 11 B 5/12 |
| A | SOVIET INVENTIONS ILLUSTRATED,<br>section E1, week D 50, January 27,<br>1982<br><br>DERWENT PUBLICATIONS LTD.,<br>London, T 03<br><br> * SU-807 383 (SHAMATOV) *<br><br>-- | 1-4,10 | |
| A | PATENT ABSTRACTS OF JAPAN, unexa-<br>mined applications, P section,<br>vol. 4, no. 39, March 28, 1980<br><br>THE PATENT OFFICE JAPANESE<br>GOVERNMENT<br>page 121 P 4<br><br> * Kokai no. 53-83 705<br> (FUJITSU) *<br><br>-- | 1-4,6,<br>10 | |
| | | | TECHNICAL FIELDS SEARCHED (Int. Cl. ³) |
| | | | G 11 B 5/00 |
| A | PATENT ABSTRACTS OF JAPAN, unexa-<br>mined applications, P section,<br>vol. 4, no. 39, March 28, 1980,<br><br>THE PATENT OFFICE JAPANESE<br>GOVERNMENT<br>page 121 P 4<br><br> * Kokai no. 53-83 706<br> (FUJITSU) *<br><br>-- | 1-4,6,<br>10 | |
| A | US - A - 4 085 430 (GERKEMA)<br><br> * Abstract; fig. 1-3 *<br><br>---- | 11 | |

The present search report has been drawn up for all claims

| Place of search | Date of completion of the search | Examiner |
|---|---|---|
| VIENNA | 06-10-1983 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82